# EUROPEAN PATENT SPECIFICATION

(11) **EP 1 881 193 B1**
(45) Date of publication and mention of the grant of the patent: **14.04.2010**
(21) Application number: 06117555.0
(22) Date of filing: 20.07.2006
(51) Int. Cl.: F03B 17/06, F03B 15/06

(54) **Switching device for underwater turbine**
Schalteinrichtung für Unterwasserturbinengenerator
Dispositif de commutation pour turbo génératrice immergée

(43) Date of publication of application: 23.01.2008
(73) Proprietor: PROCLINO AB, 135 48 Tyresö (SE)
(72) Inventor: Pentikäinen, Ismo, 203 20 Espoo (FI)
(74) Representative: Berglund, Stefan

(56) References cited:
- EP-A1- 0 038 321
- DE-U1-202004 016 159
- FR-A- 2 853 696
- FR-A1- 2 604 487
- FR-A2- 2 497 877
- US-A1- 2004 146 394

## Description

### BACKGROUND OF THE INVENTION AND PRIOR ART

The present invention refers to a hydromechanical device arranged to be provided in a streaming water for generating power according to the preamble of claims 1, see EP-38321 which is considered as the closest prior art to the subject- matter of claim 1.

JP-56060866 discloses a water power plant comprising a pipe and a turbine provided at the downstream end of the pipe. At the upstream end there is a funnel-like member for increasing the speed of the flow.

JP-2004068641 discloses a water turbine plant comprising several successive turbines.

EP-38321 discloses a water power plant having an inlet pipe that is divided into two or more part pipes. The part pipes converge towards a mixing chamber and a common turbine.

WO94/20751 discloses a water power plant having two parallel pipes. The pipes are arranged to be alternately shut off in order to create a hydraulic shock in the water in the respective pipe.

### SUMMARY OF THE INVENTION

The object of the present invention is to provide an improved hydromechanical device adapted for generating power. Especially, it is aimed at a hydromechanical device which can be used for generating power when the streaming water has a relatively low flow velocity.

This object is achieved by means of the hydromechanical device initially defined which is characterized in that the hydromechanical device comprises a switching device, provided immediately downstream the inlet conduits, the turbine is provided downstream the switching device, and the switching device is arranged to convey in an alternating order, the first flow and the second flow to the turbine in such a way that the first flow and the second flow alternately drives the turbine. By means of such a switching device the flow with the highest kinetic energy can be used to operate the turbine. In such a way the turbine may in every moment be operated by the flow of the inlet conduit where the water has the highest kinetic energy.

According to an embodiment of the invention, the switching device is arranged to convey the second flow out of the hydromechanical device when the first flow is conveyed to the turbine, and to convey the first flow out of the hydromechanical device when the second flow is conveyed to the turbine. In such a way the flow which is conveyed out of the hydromechanical device will during this time period accelerate and obtain a higher kinetic energy, whereas the flow conveyed to the turbine will decrease its velocity. By means of the switching device it is possible to switch from the flow with a relatively low velocity to the flow with a relatively high velocity and in such a manner increase the efficiency of the turbine in comparison with a turbine driven only by a single flow of water. The switching device may then be arranged to convey the flow that is conveyed out of the hydromechanical device directly back to the streaming water.

According to a further embodiment of the invention, the switching device comprises at least a first turbine passage from the first inlet conduit to the turbine, at least a second turbine passage from the second inlet conduit to the turbine, and a valve device, which is arranged to alternately take a first position and a second position, wherein the valve device in the first position maintains the first turbine passage open and the second turbine passage closed, and in the second position maintains the first turbine passage closed and the second turbine passage open. Each of the passages may have an upstream orifice arranged in a common plane, wherein the valve device comprises a valve member movable in parallel to the common plane between the first position and the second position. In such a way a valve device having a valve member reciprocating between two positions may be achieved in a relatively easy manner.

According to a further embodiment of the invention, the switching device also comprises at least a first outlet passage from the first inlet conduit out of the hydromechanical device, at least a second outlet passage from the second inlet conduit out of the hydromechanical device, wherein the valve device in the first position maintains the first turbine passage and the second outlet passage open and the first outlet passage and the second turbine passage closed, and in the second position maintains the first turbine passage and the second outlet passage closed and the first outlet passage and the second turbine passage open.

According to a further embodiment of the invention, each of the passages have an upstream orifice arranged in a common plane, wherein the valve device comprises a valve member movable in parallel to the common plane between the first position and the second position. The orifices may be arranged along a circular path, wherein the valve member is movable along the circular path. Furthermore, the valve device may comprise a motor member adapted to operate the valve member. Especially, the motor member may be adapted to rotate the valve member.

According to a further embodiment of the invention, the first inlet conduit and the second inlet conduit have a first transition conduit and a second transition conduit, respectively, provided immediately upstream the switching device, wherein the transition conduits have a decreasing flow area. By such a decreasing flow area, the velocity of the flow conveyed into the switching device may be increased.

According to a further embodiment of the invention, the second inlet conduit extends substantially in parallel to the first inlet conduit. Preferably, the two inlet conduits are arranged relatively close to each other.

According to a further embodiment of the invention, the hydromechanical device comprises an inlet funnel adapted to introduce water into the first inlet conduit and the second inlet conduit. The funnel may have a decreasing flow area in the direction of the flow and thus collect a large quantity of water which is accelerated and conveyed into the inlet conduits. Preferably, the first inlet conduit and the second inlet conduit have a respective upstream end and a respective downstream end at the switching device, wherein the inlet funnel is provided at the upstream ends of the inlet conduits.

According to a further embodiment of the invention, the hydromechanical device comprises at least one intermediate funnel arranged downstream the upstream end for introducing additional water into the first inlet conduit and the second inlet conduit. Thereby, the device may comprise a first inlet valve member for opening and closing a passage into the first inlet conduit from the intermediate funnel and a second inlet valve member for opening and closing a passage into the second inlet conduit from the intermediate funnel. Preferably, the first inlet valve member is arranged to open the passage when the first turbine passage is closed and the first outlet passage is open. The second inlet valve member is preferably open when the second turbine passage is closed and the second outlet passage is open.

According to a further embodiment of the invention, the opening of the valve members is facilitated by means of respective first and second spring members. Furthermore, the closing of the valve members may be facilitated by means of a pressure difference of the water flowing through the respective inlet conduit at a position upstream the intermediate funnel and a position downstream the intermediate funnel.

### BRIEF DESCRIPTION OF THE DRAWINGS

The present invention is now to be explained more closely by a description of various embodiments and with reference to the drawings attached hereto.
Fig. 1 illustrates schematically a hydromechanical device according to an embodiment of the invention with a valve device in a first position.
Fig. 2 illustrates schematically the hydromechanical device in Fig. 1 with the valve device in a second position.
Fig. 3 discloses schematically a side view of a switching device of the device in Fig. 1.
Fig. 4 discloses a sectional view along the lines A-A in Fig. 3.
Fig. 5 discloses a sectional view along the lone B-B in Fig. 3.
Fig. 6 discloses a sectional view through a valve member along the line C-C in Fig. 3.
Fig. 7 discloses a side view along the line D-D in Fig. 6.
Fig. 8 discloses schematically a view from above of a part of a first inlet conduit and a second inlet conduit of the hydromechanical device in Fig. 1.

### DETAILED DESCRIPTION OF VARIOUS EMBODIMENTS OF THE INVENTION

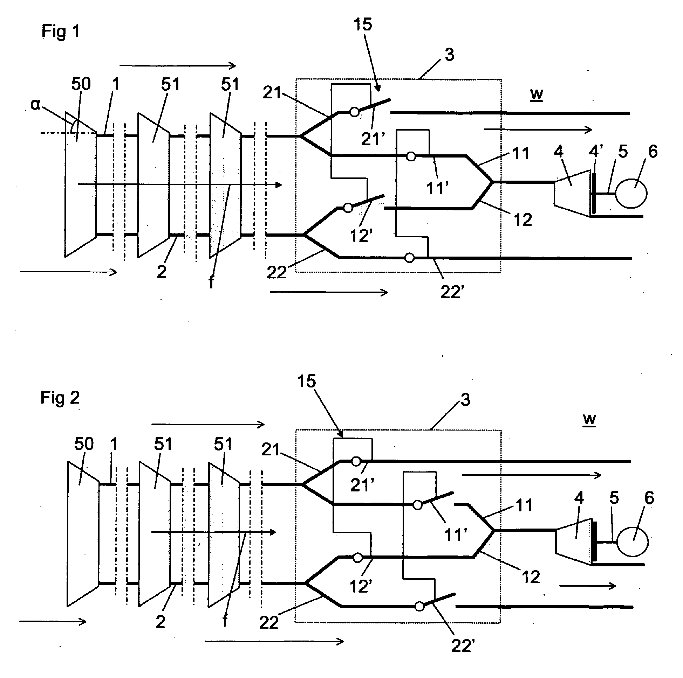

Figs. 1 and 2 discloses schematically a hydromechanical device according to the invention. The hydromechanical device is arranged to be provided in a streaming water for generating power. The streaming water w can be any kind of water stream, for instance a river, a water channel, a lake etc. The hydromechanical device is especially adapted to be arranged in a streaming water w where the flow velocity of the water is relatively low, for instance a water stream where the slope is small. The hydromechanical device is thus adapted to absorb the energy of a streaming water with a relatively low flow velocity.

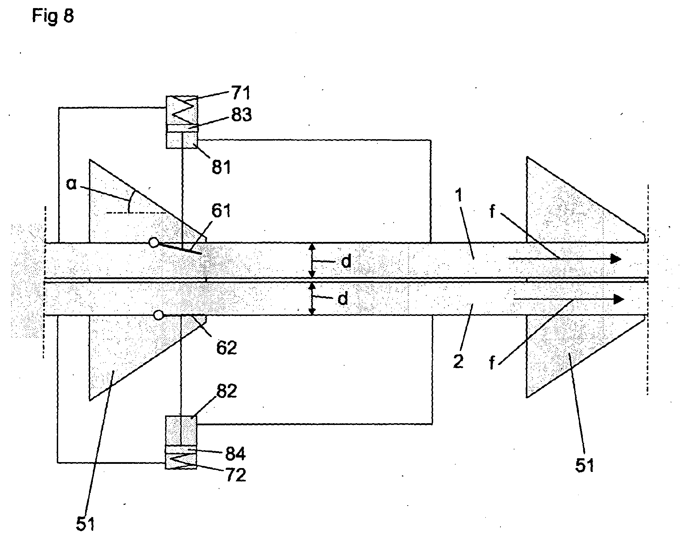

The hydromechanical device comprises a first inlet conduit 1, which is arranged to convey a first flow of water, and a second inlet conduit 2, which is arranged to convey a second flow of water. The first inlet conduit 1 and the second inlet conduit 2 have a downstream end and a upstream end with respect to the flow direction f and extend in parallel, or substantially in parallel, to each other. Furthermore, the first inlet conduit and the second inlet conduit 2 extend approximately in parallel to the flow direction f of the streaming water w, i.e. the first flow, the second flow and the streaming water w flow in substantially the same flow direction f. Preferably, the first inlet conduit 1 and the second inlet conduit 2 are arranged relatively close to each other, for instance with a distance between the first inlet conduit 1 and the second conduit 2 which is smaller than the diameter d of the inlet conduits 1, 2, see Fig. 8. The diameter d may for instance be about 0,2, 0,4, 0,6, 1 m or more. The first inlet conduit 1 and the second inlet conduit 2 have the same, or substantially the same, diameter and length. The lengths of the conduits 1 and 2 can vary but is preferably long, for instance 50, 100, 150, 200, 300, 400, 500, 600, 800, 1 000 m or more.

Furthermore, the hydromechanical device comprises a switching device 3, which is provided in the proximity of the downstream end of the inlet conduits 1, 2, and a turbine 4, which is provided downstream the switching device 3. The turbine 4 can be a rotary machine of any suitable kind for converting the kinetic energy of the water into a rotating mechanical energy. The turbine 4 has a output shaft 5 which is connected to or forms an input shaft of an electrical generator 6 for converting the rotary energy of the turbine 4 into electric energy. The turbine 4 may be connected to pr include a flywheel 4' in order to achieve a stable rotation of the turbine 4.

The switching device 3 is arranged to convey, in an alternating order, the first flow from the first inlet conduit 1 and the second flow of the second inlet conduit 2 to the turbine 4 in such a way that the first flow and the second flow alternately drives the turbine 4. Furthermore, the switching device 3 is arranged to convey the second flow of the second inlet conduit 2 out of the hydromechanical device when the first flow is conveyed to the turbine 4, and to convey the first flow of the first inlet conduit 1 out of the hydromechanical device when the second flow is conveyed to the turbine 4. More specifically, the switching device 3 is arranged to convey the flow that is conveyed out of the hydromechanical device directly back to the streaming water w. Consequently, at every time moment one of the first and the second flows will be conveyed through the turbine 4 and the other of the first and second flows will be conveyed back to the streaming water w. One of the first and second flows will thus be conveyed through the turbine 4 during a time period during which the other of the first and second flows will be conveyed back to the streaming water w. The switching device 3 is preferably adapted to permit or perform adjustment of the length of the time period. For instance, the time period could be in the order of a few seconds. During each such time period the flow being conveyed back to the streaming water w will be accelerated, whereas the water being conveyed to the turbine 4 will be retarded.

The switching device 3, schematically illustrated in Figs. 1 and 2, comprises a first turbine passage 11 extending from the first inlet conduit 1 to the turbine 4, a second turbine passage 12 extending from the second inlet conduit 2 to the turbine 4, a first outlet passage 21 extending from the first inlet conduit 1 out of the hydromechanical device, and a second outlet passage 22 extending from the second inlet conduit 2 out of the hydromechanical device.

Furthermore, the switching device 3 comprises a valve device 15. In Figs. 1 and 2, the valve device 15 is illustrated by four valve members 11', 12', 21' and 22'. The valve device 15 is arranged to alternately take a first position and a second position. The first position is illustrated in Fig. 1, whereas the second position is illustrated in Fig. 2. In the first position, the valve device 15 maintains the first turbine passage 11 open, the second turbine passage 12 closed, the first outlet passage 21 closed and the second outlet passage 22 open. Consequently, in the first position the first flow from the first inlet conduit 1 is conveyed through the first turbine passage 11 to the turbine 4, whereas the second flow of the second inlet conduit 2 is conveyed out of the hydromechanical device back to the streaming water w. In the second position, the valve device 15 maintains the first turbine passage 11 closed, the second turbine passage 12 open, the first outlet passage 21 open and the second outlet passage 22 closed. Consequently, in the second position the second flow of the second inlet conduit 2 will be conveyed through the second turbine passage 12 to the turbine 4, whereas the first flow of the first inlet conduit 1 will be conveyed out of the hydromechanical device back to the streaming water w.

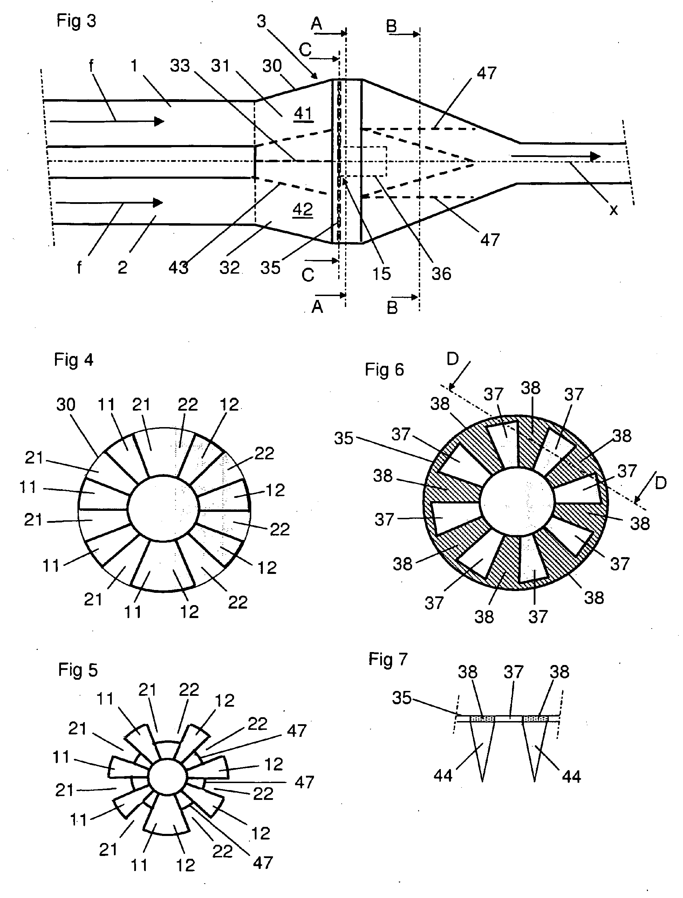

The valve device 15 and the valve members 11', 12', 21', 22' disclosed in Figs. 1 and 2 can be of any suitable kind, for instance disc valves. Figs. 3-7 discloses a switching device 3 with a valve device 15 of another design which is shown as an example of a preferred embodiment. The switching device 3 has a longitudinal centre axis x being substantially parallel with the flow direction f, and comprises a housing 30 enclosing the switching device 3 and the valve device 15 proper. The housing 30 also encloses a downstream end portion of the first inlet conduit 1 and the second inlet conduit 2. The housing 30 is divided into a first part 31 and a second part 32 by means of a partitioning wall 33.

Each of the turbine passages 11, 12 and the outlet passages 21, 22 has an upstream orifice illustrated in Fig. 4. The upstream orifices are arranged in a common plane substantially perpendicular to the flow direction. As can be seen from Figs. 4 and 5 the switching device 3 comprises a plurality of first turbine passages 11, first outlet passages 21, second turbine passages 12 and second outlet passages 22. The valve device 15 comprises a valve member 35 which is movable in parallel to the common plane of the orifices. The valve device 15 also comprises a motor member 36 adapted to operate the valve member 35. The motor member 36 is adapted to rotate the valve member 35 around the longitudinal axis x with a reciprocating movement. The valve member 35 is designed as a disc comprising alternately located passages 37 and wall elements 38.

The above mentioned downstream end portion of the first inlet conduit 1 and the second inlet conduit 2 forms a first transition conduit 41 of the first inlet conduit 1, and a second transition conduit 42 of the second inlet conduit 2. The first transition conduit 41 and the second transition conduit 42 are thus provided immediately upstream the switching device 3 and more specifically immediately upstream the valve member 35. The transition conduits 41 and 42 have a decreasing flow area so that the first flow and the second flow will be accelerated in the transition conduits 41, 42. Such a decreasing flow area is, in the embodiment disclosed in Figs. 3-8, achieved by a first frustoconical member 33 being concentric to the longitudinal centre axis x. Furthermore, wedge like members 44 are arranged on the valve member 35 and taper in a direction opposite to the flow direction f from the upstream side wall of the valve member 35. The wedge like members, see Fig. 7, thus decrease the flow area of the flow flowing through the switching device 3 and through the passages 37 of the valve member 35.

Downstream the valve member 35 and the above mentioned orifices, the housing 30 has a tapering diameter in the flow direction f. The outlet passages 21 and 22 are defined by a bottom wall 47 being substantially parallel to the centre axis x.

As can be seen from Fig. 1 the first inlet conduit 1 and the second inlet conduit 2 have an inlet funnel 50 provided at the upstream end of the inlet conduits 1 and 2. The inlet funnel 50 has a tapering flow area in the flow direction f and is thus adapted to accelerate a quantity of water to be introduced into the inlet conduits 1 and 2. Furthermore, the hydromechanical device may comprise one, two, three, four or more intermediate funnels 51 arranged downstream the upstream ends of the inlet conduits 1, 2 for introducing additional water into the first inlet conduit 1 and the second inlet conduit 2. The funnel 50 and/or the intermediate funnel 51 may be adjustable, i.e. the degree of the tapering flow area may be adjusted. The funnels 50, 51 are tapering with an angle α to the flow direction f, wherein the angle α may be adjusted by any suitable adjustment member (not disclosed).

Furthermore, the hydromechanical device comprises a first inlet valve member 61 for opening and closing a passage into the first inlet conduit 1 from the intermediate funnel 51, and a second inlet valve member 62 for opening and closing a passage into the second inlet conduit 2 from the intermediate funnel 51, see Fig. 8. Such valve members 61, 62 can be provided in each intermediate funnel 51. The opening of the valve members 61, 62 is facilitated by means of a respective first and second spring members 71, 72. The closing of the valve members 61, 62 is facilitated by means of a pressure difference of the water flowing through the respective conduit 1, 2 at a position upstream the intermediate funnel 51 and downstream the intermediate funnel 51. The pressure of the water flowing through the respective conduit 1, 2 is transferred to a cylinder member 81, 82 in which a piston 83, 84 responds to the pressure difference and actuates the valve members 61, 62. The spring members 71, 72 are provided in the cylinders for acting on the piston 83, 84. Preferably, the operation of the valve members 61, 62 is associated with the operation of the valve device 15 in such a way that the valve member 61 of the first inlet conduit 1 is closed when the first turbine passage 11 is open, and the valve member 62 of the second inlet conduit 2 is closed when the turbine passage 12 is open. Furthermore, the valve member 61 is open when the outlet passage 21 is open and the valve member 62 is open when the outlet passage 22 is open.

The present invention is not limited to the embodiments disclosed but may be varied and modified within the scope of the following claims.

## Claims

1. A hydromechanical device arranged to be provided in a streaming water (w) for generating power, comprising
a first inlet conduit (1), arranged to convey a first flow of water,
a second inlet conduit (2), arranged to convey a second flow of water, and
a turbine (4),
**characterised in that**
the hydromechanical device comprises a switching device (3), provided immediately downstream the inlet conduits (1, 2),
the turbine (4) is provided downstream the switching device (3), and
the switching device (3) is arranged to convey, in an alternating order, the first flow and the second flow to the turbine (4) in such a way that the first flow and the second flow alternately drives the turbine (4).

2. A hydromechanical device according to claim 1, wherein the switching device (3) is arranged to convey the second flow out of the device when the first flow is conveyed to the turbine (4), and to convey the first flow out of the hydromechanical device when the second flow is conveyed to the turbine (4).

3. A hydromechanical device according to any one of claims 1 and 2, wherein the switching device (3) is arranged to convey the flow that is conveyed out of the hydromechanical device directly back to the streaming water (w).

4. A hydromechanical device according to any one of preceding claims, wherein the switching device (3) comprises
at least a first turbine passage (11) from the first inlet conduit (1) to the turbine (4),
at least a second turbine passage (12) from the second inlet conduit (2) to the turbine (4), and
a valve device (15), which is arranged to alternately take a first position and a second position,
wherein the valve device (15) in the first position maintains the first turbine passage (11) open and the second turbine passage (12) closed, and in the second position maintains the first turbine passage (11) closed and the second turbine passage (12) open.

5. device according to claim 4, wherein each of the passages (11, 12) has an upstream orifice arranged in a common plane and wherein the valve device (15) comprises a valve member (35) movable in parallel to the common plane between the first position and the second position.

6. A device according to claim 4, wherein the switching device (3) also comprises
at least a first outlet passage (21) from the first inlet conduit (1) out of the hydromechanical device,
at least a second outlet passage (22) from the second inlet conduit (2) out of the hydromechanical device, wherein the valve device (15) in the first position maintains the first turbine passage (11) and the second outlet passage (22) open and the first outlet passage (21) and the second turbine passage (12) closed, and in the second position maintains the first turbine passage (11) and the second outlet passage (22) closed and the first outlet passage (21) and the second turbine passage open (12).

7. A device according to claim 6, wherein each of the passages (11, 12, 21, 22) has an upstream orifice arranged in a common plane and wherein the valve device (15) comprises a valve member (35) movable in parallel to the common plane between the first position and the second position.

8. A device according to claim 7, wherein the orifices are arranged along a circular path, wherein the valve member (35) is movable along the circular path.

9. A device according to any one of claims 7 and 8, wherein the valve device (15) comprises a motor member (36) adapted to operate the valve member (35).

10. A device according to claims 8 and 9, wherein the motor member (36) is adapted to rotate the valve member (35).

11. A device according to any one of the preceding claims, wherein the first inlet conduit and the second inlet conduit have a first transition conduit (41) and a second transition conduit (42), respectively, provided immediately upstream the switching device, wherein the transition conduits (41, 42) have a decreasing flow area.

12. A device according to any one of the preceding claims, wherein the second inlet conduit (2) extends substantially in parallel to the first inlet conduit (1).

13. Device according to any one of the preceding claims, wherein the hydromechanical device comprises an inlet funnel (50) adapted to introduce water into the first inlet conduit (1) and the second inlet conduit (2).

14. A device according to claim 13, wherein the first inlet conduit (1) and the second inlet conduit (2) have a respective upstream end and a respective downstream end in the proximity of the switching device (3), wherein the inlet funnel (50) is provided at the upstream ends of the inlet conduits (1, 2).

15. A device according to claim 14, wherein the hydromechanical device comprises at least one intermediate funnel (51) arranged downstream the upstream end for introducing additional water into the first inlet conduit (1) and the second inlet conduit (2).

16. A device according to claim 15, wherein the device comprises a first inlet valve member (61) for opening and closing a passage into the first inlet conduit (1) from the intermediate funnel (51) and a second inlet valve member (62) for opening and closing a passage into the second inlet conduit (2) from the intermediate funnel (51).

17. A device according to claim 16, wherein the opening of the valve members (61, 62) is facilitated by means of respective first and second spring members (71, 72).

18. A device according to any one of claims 16 and 17, wherein the closing of the valve members (61, 62) is facilitated by means of a pressure difference of the water flowing through the respective conduit at a position upstream the intermediate funnel (51) and a position downstream the intermediate funnel (51).

## Patentansprüche

1. Hydromechanische Einrichtung, die zur Erzeugung von Energie in strömendem Wasser (w) angeordnet ist, mit einem ersten Einlasskanal (1), der angeordnet ist, um einen ersten Wasserfluss abzuleiten, einem zweiten Einlasskanal (2), der angeordnet ist, um einen zweiten Wasserfluss abzuleiten, und einer Turbine (4),
**dadurch gekennzeichnet, dass**
die hydromechanische Einrichtung eine Schalteinrichtung (3) aufweist, die stromabwärts direkt nach den Einlasskanälen (1, 2) angeordnet ist, die Turbine (4) stromabwärts der Schalteinrichtung (3) angeordnet ist und die Schalteinrichtung (3) angeordnet ist, um abwechselnd den ersten Fluss und den zweiten Fluss derart zu der Turbine (4) zu leiten, dass der erste Fluss und der zweite Fluss abwechselnd die Turbine (4) antreiben.

2. Hydromechanische Einrichtung nach Anspruch 1, worin die Schalteinrichtung (3) angeordnet ist, um den zweiten Fluss aus der Einrichtung zu leiten, wenn der erste Fluss zu der Turbine (4) geleitet wird, und um den ersten Fluss aus der hydromechanischen Einrichtung zu leiten, wenn der zweite Fluss zu der Turbine (4) geleitet wird.

3. Hydromechanische Einrichtung nach einem der Ansprüche 1 und 2, worin die Schalteinrichtung (3) angeordnet ist, um den Fluss, der aus der hydromechanischen Einrichtung geleitet wurde, direkt zurück in das strömende Wasser (w) zu leiten.

4. Hydromechanische Einrichtung nach einem der vorstehenden Ansprüche, worin die Schalteinrichtung (3) von dem ersten Einlasskanal (1) zu der Turbine (4) mindestens einen ersten Turbinendurchlass (11), von dem zweiten Einlasskanal (2) zu der Turbine (4) mindestens einen zweiten Turbinendurchlass (12) und eine Ventileinrichtung (15) aufweist, die angeordnet ist, um abwechselnd eine erste und eine zweite Position einzunehmen, wobei die
Ventileinrichtung (15) in der ersten Position den ersten Turbinendurchlass (11) offen und den zweiten Turbinendurchlass (12) geschlossen hält und in der zweiten Position den ersten Turbinendurchlass (11) geschlossen und den zweiten Turbinendurchlass (12) offen hält.

5. Einrichtung nach Anspruch 4, worin beide Durchlässe (11, 12) eine stromaufwärtig und in einer Ebene angeordnete Öffnung besitzen und worin die Ventileinrichtung (15) ein zwischen der ersten Position und der zweiten Position parallel zu der gemeinsamen Ebene bewegliches Ventilelement (35) besitzt.

6. Einrichtung nach Anspruch 4, worin die Schalteinrichtung außerdem mindestens einen von dem ersten Einlasskanal (1) aus der hydromechanischen Einrichtung hinausführenden ersten Auslasskanal (21) und mindestens einen von dem zweiten Einlasskanal (2) aus der hydromechanischen Einrichtung hinausführenden zweiten Auslasskanal (22) aufweist, worin die Ventileinrichtung (15) in der ersten Position den ersten Turbinendurchlass (11) und den zweiten Auslasskanal (22) offen und den ersten Auslasskanal (21) und den zweiten Turbinendurchlass (12) geschlossen hält, und in der zweiten Position den ersten Turbinendurchlass (11) und den zweiten Auslasskanal (22) geschlossen und den ersten Auslasskanal (21) und den zweiten Turbinendurchlass (12) offen hält.

7. Einrichtung nach Anspruch 6, worin jeder der Kanäle (11, 12, 21, 22) eine stromaufwärtige Öffnung besitzt, die in einer gemeinsamen Ebene angeordnet sind, wobei die Ventileinrichtung (15) eine zwischen der ersten Position und der zweiten Position parallel zu der gemeinsamen Ebene bewegbares Ventilelement (35) aufweist.

8. Einrichtung nach Anspruch 7, worin die Öffnungen entlang einer Kreislinie angeordnet sind, wobei das Ventilelement (35) entlang der Kreislinie bewegbar ist.

9. Einrichtung nach einem der Ansprüche 7 und 8, worin die Ventileinrichtung (15) ein Motorelement (36) aufweist, welches das Ventilelement (35) antreibt.

10. Einrichtung nach einem der Ansprüche 8 und 9, worin das Motorelement (36) angeordnet ist, um das Ventilelement (35) zu drehen.

11. Einrichtung nach einem der vorstehenden Ansprüche, worin der erste Einlasskanal und der zweite Einlasskanal einen ersten Überleitungskanal (41) und einen zweiten Überleitungskanal (42) besitzen, die jeweils direkt stromaufwärtig der Schalteinrichtung angeordnet sind, wo die Überleitungskanäle (41, 42) eine abnehmende Durchflussfläche besitzen.

12. Einrichtung nach einem der vorstehenden Ansprüche, worin sich der zweite Einlasskanal (2) im Wesentlichen parallel zu dem ersten Einlasskanal (1) erstreckt.

13. Einrichtung nach einem der vorstehenden Ansprüche, worin die hydromechanische Einrichtung einen Einführtrichter (50) besitzt, der angeordnet ist, um Wasser in den ersten Einlasskanal (1) und den zweiten Einlasskanal (2) zu leiten.

14. Einrichtung nach Anspruch 13, worin der erste Einlasskanal (1) und der zweite Einlasskanal (2) jeweils ein stromaufwärtiges Ende und ein stromabwärtiges Ende in der Nähe der Schalteinrichtung (3) besitzen, worin der Einführtrichter (50) an den stromaufwärtigen Enden der Einführkanäle (1, 2) angeordnet ist.

15. Einrichtung nach Anspruch 14, wobei die hydromechanische Einrichtung mindestens einen weiteren Trichter (51) aufweist, der stromabwärts des stromaufwärtigen Endes angeordnet ist, um weiteres Wasser in den ersten Einlasskanal (1) und den zweiten Einlasskanal (2) zu leiten.

16. Einrichtung nach Anspruch 15, wobei die Einrichtung ein erstes Einlassventilelement (61) zum Öffnen und Schließen eines Durchlasses von dem weiteren Trichter (51) in den ersten Einlasskanal (1) und ein zweites Einlassventilelement (62) zum Öffnen und Schließen eines Durchlasses von dem weiteren Trichter (51) in den zweiten Einlasskanal (2) besitzt.

17. Einrichtung nach Anspruch 16, wobei das Öffnen der Ventilelemente (61, 62) durch jeweils ein erstes und ein zweites Federelement (71, 72) ermöglicht wird.

18. Einrichtung nach einem der Ansprüche 16 und 17, wobei das Schließen der Ventilelemente (61, 62) durch eine Druckdifferenz des Wassers ermöglicht wird, das durch den entsprechenden Kanal bei einer Position stromaufwärts des weiteren Trichters (51) und einer Position stromabwärts des weiteren Trichters (51) fließt.

## Revendications

1. Dispositif hydromécanique conçu pour être disposé dans un écoulement d'eau (w) pour générer de l'énergie, comprenant :
un premier conduit d'entrée (1) conçu pour transporter un premier écoulement d'eau,
un second conduit d'entrée (2) conçu pour transporter un second écoulement d'eau, et
une turbine (4),
**caractérisé en ce que**
le dispositif hydromécanique comprend un dispositif de commutation (3) disposé immédiatement en aval des conduits d'entrée (1, 2),
la turbine (4) est disposées en aval du dispositif de commutation (3) et
le dispositif de commutation (3) est conçu pour transporter, de manière alternée, le premier écoulement et le second écoulement vers la turbine (4) de façon à ce que le premier écoulement et le second écoulement entraînent alternativement la turbine (4).

2. Dispositif hydromécanique selon la revendication 1, dans lequel le dispositif de commutation (3) est conçu pour transporter le second écoulement hors du dispositif lorsque le premier écoulement est transporté vers la turbine (4) et pour transporter le premier écoulement hors du dispositif hydromécanique lorsque le second écoulement est transporté vers la turbine (4).

3. Dispositif hydromécanique selon l'une des revendications 1 et 2, dans lequel le dispositif de commutation (3) est conçu pour transporter l'écoulement qui est transporté hors du dispositif hydromécanique directement vers l'écoulement d'eau (w).

4. Dispositif hydromécanique selon l'une des revendications précédentes, dans lequel le dispositif de commutation (3) comprend :
au moins un premier passage de turbine (11) du premier conduit d'entrée (1) vers la turbine (4),
au moins un second passage de turbine (12) du second conduit d'entrée (2) vers la turbine (4) et
un dispositif à soupape (15) conçu pour adopter alternativement une première position et une seconde position,
dans lequel le dispositif à soupape (15) maintient, dans la première position, le premier passage de turbine (11) ouvert et le second passage de turbine (12) fermé et maintient, dans la seconde position, le premier passage de turbine (11) fermé et le second passage de turbine (12) ouvert.

5. Dispositif selon la revendication 4, dans lequel chacun des passages (11, 12) comprend un orifice en amont disposé dans un plan commun et dans lequel le dispositif à soupape (15) comprend un élément de soupape (35) mobile parallèlement au plan commun entre la première position et la seconde position.

6. Dispositif selon la revendication 4, dans lequel le dispositif de commutation (3) comprend également :
au moins un premier passage de sortie (21) du premier conduit d'entrée (1) hors du dispositif hydromécanique,
au moins un second passage de sortie (22) du second conduit d'entrée (2) hors du dispositif hydromécanique, dans lequel le dispositif à soupape (15) maintient, dans la première position, le premier passage de turbine (11) et le second passage de sortie (22) ouverts, et le premier passage de sortie (21) et le second passage de turbine (12) fermés et maintient, dans la seconde position, le premier passage de turbine (11) et le second passage de sortie (22) fermés, et le premier passage de sortie (21) et le second passage de turbine (12) ouverts.

7. Dispositif selon la revendication 6, dans lequel chacun des passages (11, 12, 21, 22) comprend un orifice amont disposé dans un plan commun et dans lequel le dispositif à soupape (15) comprend un élément de soupape (35) mobile parallèlement au plan commun entre la première position et la seconde position.

8. Dispositif selon la revendication 7, dans lequel les orifices sont disposés le long d'un trajet circulaire, l'élément de soupape (35) étant mobile le long du trajet circulaire.

9. Dispositif selon l'une des revendications 7 ou 8, dans lequel le dispositif à soupape (15) comprend un élément de moteur (36) conçu pour actionner l'élément de soupape (35).

10. Dispositif selon les revendications 8 et 9, dans lequel l'élément de moteur (36) est conçu pour faire tourner l'élément de soupape (35).

11. Dispositif selon l'une des revendications précédentes, dans lequel le premier conduit d'entrée et le second conduit d'entrée comprennent respectivement un premier conduit de transition (41) et un second conduit de transition (42), disposés immédiatement en amont du dispositif de commutation, les conduits de transition (41, 42) présentant une section d'écoulement décroissante.

12. Dispositif selon l'une des revendications précédentes, dans lequel le second conduit d'entrée (2) s'étend sensiblement parallèlement au premier conduit d'entrée (1).

13. Dispositif selon l'une des revendications précédentes, dans lequel le dispositif hydromécanique comprend un entonnoir d'entrée (50) conçu pour introduire de l'eau dans le premier conduit d'entrée (1) et dans le second conduit d'entrée (2).

14. Dispositif selon la revendication 13, dans lequel le premier conduit d'entrée (1) et le second conduit d'entrée (2) présentent chacun une extrémité amont et une extrémité aval à proximité du dispositif de commutation (3), l'entonnoir d'entrée (50) étant disposé au niveau des extrémités amont des conduits d'entrée (1,2).

15. Dispositif selon la revendication 14, dans lequel le dispositif hydromécanique comprend au moins un entonnoir intermédiaire (51) disposé en aval de l'extrémité amont pour introduire de l'eau supplémentaire dans le premier conduit d'entrée (1) et dans le second conduit d'entrée (2).

16. Dispositif selon la revendication 15, dans lequel le dispositif comprend un premier élément de soupape d'entrée (61) pour l'ouverture et la fermeture d'un passage vers le premier conduit d'entrée (1) à partir de l'entonnoir intermédiaire (51) et un second élément de soupape d'entrée (62) pour l'ouverture et la fermeture d'un passage vers le second conduit d'entrée (2) à partir de l'entonnoir intermédiaire (51).

17. Dispositif selon la revendication 16, dans lequel l'ouverture des éléments de soupapes (61, 62) est facilitée par un premier et un second éléments à ressorts (71, 72).

18. Dispositif selon l'une des revendications 16 ou 17, dans lequel la fermeture des éléments de soupapes (61, 62) est facilitée par une différence de pression de l'eau s'écoulant à travers le conduit respectif au niveau d'une position en amont de l'entonnoir intermédiaire (51) et une position en aval de l'entonnoir intermédiaire (51).
